(19) **Europäisches Patentamt / European Patent Office / Office européen des brevets**

(11) **EP 4 465 030 B1**

(12) **EUROPEAN PATENT SPECIFICATION**

(45) Date of publication and mention of the grant of the patent:
**08.07.2026  Bulletin 2026/28**

(21) Application number: **22920237.9**

(22) Date of filing: **13.01.2022**

(51) International Patent Classification (IPC):
**G01N 23/20** *(2018.01)*    **G01N 23/02** *(2006.01)*

(52) Cooperative Patent Classification (CPC):
**G01N 23/02; G01N 23/20;** G01N 2223/052;
G01N 2223/305; G01N 2223/345; G01N 2223/601

(86) International application number:
**PCT/JP2022/000971**

(87) International publication number:
**WO 2023/135712 (20.07.2023 Gazette 2023/29)**

(54) **PARTICLE BEAM ANALYSIS DEVICE AND PARTICLE BEAM ANALYSIS METHOD**

TEILCHENSTRAHLANALYSEVORRICHTUNG UND TEILCHENSTRAHLANALYSEVERFAHREN

DISPOSITIF D'ANALYSE DE FAISCEAU DE PARTICULES ET PROCÉDÉ D'ANALYSE DE FAISCEAU DE PARTICULES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.11.2024  Bulletin 2024/47**

(73) Proprietor: **Hitachi, Ltd.**
**Tokyo 100-8280 (JP)**

(72) Inventors:
• **ASAHARA, Akinori**
**Tokyo 100-8280 (JP)**
• **YAMAMOTO, Mitsuya**
**Tokyo 100-8280 (JP)**

• **MORITA, Hidekazu**
**Tokyo 100-8280 (JP)**

(74) Representative: **MERH-IP Matias Erny Reichl Hoffmann**
**Patentanwälte PartG mbB**
**Paul-Heyse-Straße 29**
**80336 München (DE)**

(56) References cited:
WO-A1-2020/218462    CN-A- 104 089 851
JP-A- 2004 020 196    JP-A- 2006 113 042
JP-A- 2014 052 223    JP-A- 2017 116 330
JP-A- 2018 179 537    JP-A- 2019 056 587
JP-A- 2019 056 587    JP-B2- 6 925 842

EP 4 465 030 B1

**Description**

Technical Field

The present invention relates to a particle beam analyzer and a particle beam analysis method, and more particularly to a particle beam analyzer and a particle beam analysis method for analyzing a measurement result obtained using a particle beam.

Background Art

Measurement using a particle beam is widely used, mainly in the field of materials science, as a method for observing a microstructure of a substance. The particle beam herein refers to a proton beam (α ray), an electron beam (β ray), a muon beam, a photon beam (that is, an electromagnetic wave, γ-ray, X-ray, visible light, infrared ray, and the like), a neutron beam, or the like. A sample such as a metal is irradiated with such particle beams, and outputs of reflected, transmitted, and scattered particle beams (particles different from the injected particles may be outputted) are measured by a chemical or mechanical detection unit. Then, a nanometer-scale microstructure of the sample is estimated from the distribution shape of the intensity of the particle beams (the number of measured particles). Note that similar measurement can be performed as long as measurement is possible using the frequency of a sound wave or the like, or may be treated as a particle. Hereinafter, the reflected, scattered, and transmitted particle beam is referred to as an output particle beam.

A process until particles injected into a sample in such measurement interact with a minute structure (hereinafter, referred to as a microstructure) inside the sample and are scattered is formulated as a dynamic of a quantum mechanical wave function. Therefore, the distribution of the particle beam intensity can be calculated as a function that depends on the vector change of the wave count ($1/2\pi$ of the frequency) of the wave function of the output particle beam and on the microstructure. Hence, attempts have been made to use this function to reconstruct information on a microstructure from the intensity distribution of an output particle beam. However, the above-described microstructure-dependent function cannot be formulated by an inverse function, and information on the microstructure cannot be easily calculated from the intensity distribution of the output particle beam. For this reason, a solution for solving this inverse problem by means of estimation is required.

For example, N-PTL 1 discloses the Monte Carlo method as a method for calculating information on a scatterer from the results of a scattering experiment. The Monte Carlo method is a method for calculating a scattering pattern while randomly changing a quantity related to a spatial structure and searching for a condition that a difference from a measurement result becomes small.

In addition, PTL 1 discloses a method for obtaining a scatterer size distribution from a two-dimensional scattering pattern by means of function fitting.

As another similar technique, a super-resolution technique for estimating a higher-resolution image from a plurality of photographic images obtained by photographing the same object is known. In addition, there is also known a tomography technique in which an object is photographed from various directions and a three-dimensional structure is restored from the images. Similar techniques are known from WO 2020/218462.

Citation List

Patent Literature

PTL 1: JP 2017-116330 A

Non Patent Literature

N-PTL 1: ISO 17867:2015 "Particle size analysis - Small-angle X-ray scattering"

Summary of Invention

Technical Problem

In the Monte Carlo method disclosed in N-PTL 1, because the parameters are randomly changed, it takes a lot of calculation time to reach a correct result. Furthermore, because the parameters are changed randomly, the result obtained is not always correct.

In addition, in the method of PTL 1, a simple distribution function (basis function) with which the distribution of scatterer size can be easily calculated is assumed. Further, the basis function is expressed by multiplying the basis function by a coefficient and then performing addition so that the difference from the measurement result becomes small. As the basis function, a simplified rectangular function that has a constant value of "1" in a specific section and a constant value of "0" in other sections is often used. The estimation calculation at that time is called an indirect Fourier transform. However, in this method, there are also cases where the distribution function of the scatterer size cannot be accurately expressed by adding together simplified basis functions. In that case, a problem arises where an appropriate result of the microstructure cannot be obtained. Therefore, a method for expressing a distribution function of the size of the scatterer using a larger number of basis functions is also conceivable. For example, in the case of the indirect Fourier transform, a method for reducing the width of the rectangular function is used. However, in this case, the number of coefficients to be determined also increases, and the coefficients cannot be determined. In this case, there is also a method in which the coefficient can be determined by providing some kind of constraint. However, this constraint needs to be determined as needed from a condition obtained as prior knowledge at the time of analysis, for example, smoothness assumed for the distribution of the sizes of the scatterer. As described above, in PTL 1, analysis work by an expert having sufficient prerequisite knowledge regarding the scatterer is essential, and it is difficult to automate this analysis.

In addition, another similar technique described above is a technique for reducing deterioration of a signal in a measurement process by using a plurality of pieces of information in combination. These techniques cannot be applied to a particle beam analyzer because the conditions are different from the conditions for measurement using a particle beam.

In view of the above problems, an object of the present invention is to provide a particle beam analyzer and a particle beam analysis method capable of estimating an objective and accurate density distribution of a spatial structure while reducing a processing load.

Solution to Problem

In order to achieve the foregoing object, one representative example of the particle beam analyzer of the present invention is a particle beam analyzer that, when an input profile is provided which is obtained by a particle beam being injected into a sample and a reflected beam or a transmitted beam thereof being detected, calculates a spatial density distribution of the sample, the particle beam analyzer including: a profile database that holds a plurality of pieces of data of a spatial density distribution and a profile corresponding to the spatial density distribution; a profile difference evaluation unit that calculates a difference between a profile held in the profile database and the input profile; a profile selection unit that selects a plurality of profiles from the data held in the profile database, on the basis of the difference calculated by the profile difference evaluation unit; an uncertainty level evaluation unit that calculates an optimization target position constituting a spatial position specified on the basis of a variation in spatial density distribution for each spatial position with respect to a plurality of spatial density distributions corresponding to the profile selected by the profile selection unit; a differential regression analysis unit that calculates, using regression analysis, a function for obtaining, from the spatial density distribution, a difference from the input profile by using the data held in the profile database and the difference calculated by the profile difference evaluation unit; and a spatial density distribution optimization unit that calculates a spatial density distribution for which the difference of the function calculated by the differential regression analysis unit is minimized, by using, as a variable, only the spatial density in the optimization target position calculated by the uncertainty level evaluation unit.

Advantageous Effects of Invention

According to the present invention, in the particle beam analyzer and the particle beam analysis method, it is possible to estimate an objective and accurate density distribution of a spatial structure while reducing a processing load.

Problems, configurations, and advantageous effects other than the above will be clarified by the following embodiments.

Brief Description of Drawings

[FIG. 1] FIG. 1 is a block diagram of a computer system for carrying out a mode according to an embodiment of the present disclosure.
[FIG. 2] FIG. 2 is a functional block diagram illustrating an embodiment of the particle beam analyzer of the present invention.
[FIG. 3] FIG. 3 is a schematic diagram of hardware illustrating an embodiment of the particle beam analyzer of the present invention.
[FIG. 4] FIG. 4 is a conceptual diagram illustrating an example of particle beam reflection measurement for acquiring particle beam measurement data used by the particle beam analyzer of the present invention.

[FIG. 5] FIG. 5 is a diagram illustrating an example of particle beam measurement data used by the particle beam analyzer of the present invention.

[FIG. 6] FIG. 6 is a diagram to illustrate a relationship between a microspace structure and profile data.

[FIG. 7] FIG. 7 is a diagram to illustrate the relationship between a microspace structure and profile data for matching a predicted value with a measured value.

[FIG. 8] FIG. 8 is a flowchart illustrating an example of processing of the particle beam analyzer of the present invention.

[FIG. 9] FIG. 9 is a diagram illustrating an example of a profile data structure.

[FIG. 10] FIG. 10 is a diagram illustrating an example of a profile database.

[FIG. 11] FIG. 11 is a diagram illustrating an example of a microspatial distribution data structure.

[FIG. 12] FIG. 12 is a flowchart illustrating an example of simulation condition specifying processing in the particle beam analyzer of the present invention.

[FIG. 13] FIG. 13 is an example of a display of an analysis result outputted by the particle beam analyzer of the present invention.

[FIG. 14] FIG. 14 is an example of a display when data is to be added to the particle beam analyzer of the present invention.

Description of Embodiments

A mode for carrying out the present invention will be described.

<Computer system for carrying out mode according to embodiment>

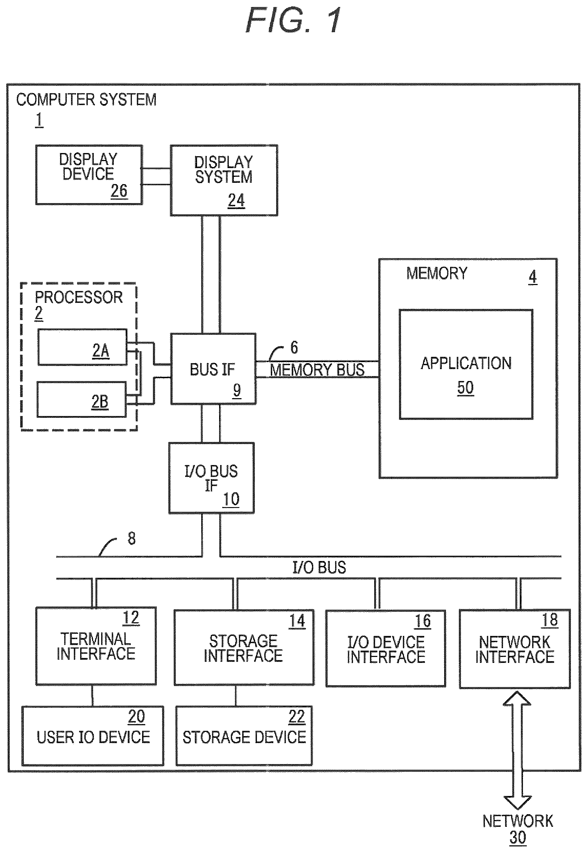

FIG. 1 is a block diagram of a computer system 1 for carrying out a mode according to an embodiment of the present disclosure. The mechanisms and devices of the various embodiments disclosed herein may be applied to any suitable computing system. The main components of the computer system 1 include one or more processors 2, a memory 4, a terminal interface 12, a storage interface 14, an I/O (input/output) device interface 16, and a network interface 18. These components may be interconnected via a memory bus 6, an I/O bus 8, a bus interface unit 9, and an I/O bus interface unit 10.

The computer system 1 may include one or more processing devices 2A and 2B collectively referred to as the processors 2. Each processor 2 executes instructions stored in the memory 4 and may include an on-board cache. In a certain embodiment, the computer system 1 may include a plurality of processors, and in another embodiment, the computer system 1 may be a system which includes a single processing device. As the processing device, a central processing unit (CPU), a field-programmable gate array (FPGA), a graphics processing unit (GPU), a digital signal processor (DSP), or the like, can be applied.

In a certain embodiment, the memory 4 may include a random access semiconductor memory, a storage device, or a storage medium (either volatile or non-volatile) for storing data and programs. In a certain embodiment, the memory 4 represents the entire virtual memory of the computer system 1, and may include a virtual memory of another computer system connected to the computer system 1 via a network. Although the memory 4 may be conceptually considered to be a single component, in other embodiments this memory 4 may be more complex in configuration, such as a hierarchy of caches and other memory devices. For example, the memory may exist as caches of a plurality of levels, and these caches may be divided up for each function. As a result, one cache may hold instructions, and the other cache may be configured to hold non-instruction data used by the processors. The memory may be distributed and associated with a variety of different processing devices as per a so-called NUMA (Non-Uniform Memory Access) computer architecture.

The memory 4 may store all or a portion of the programs, modules, and data structures for carrying out the functions described herein. For example, the memory 4 may store a potential factor specific application 50. In a certain embodiment, the latent factor specifying application 50 may include instructions or descriptions for performing the functions described below on the processors 2, or may include instructions or descriptions that are interpreted by another instruction or description. In a certain embodiment, the latent factor specifying application 50 may be implemented using hardware via a semiconductor device, a chip, logic gates, a circuit, a circuit card, and/or other physical hardware devices instead of a processor-based system or in addition to a processor-based system. In a certain embodiment, the latent factor specifying application 50 may include data other than instructions or descriptions. In a certain embodiment, a camera, sensor, or another data input device (not shown) may be provided to communicate directly with the bus interface unit 9, the processors 2, or other hardware of the computer system 1. Such a configuration may reduce the need for the processors 2 to access the memory 4 and the latent factor specifying application.

The computer system 1 may include a bus interface unit 9 that performs communications between the processors 2, the memory 4, the display system 24, and the I/O bus interface unit 10. The I/O bus interface unit 10 may be coupled to the I/O bus 8, which serves to transfer data to and from various I/O units. The I/O bus interface unit 10 may communicate with a plurality of I/O interface units 12, 14, 16, and 18, also known as I/O processors (IOP) or I/O adapters (IOA), via the I/O bus 8. The display system 24 may include a display controller, a display memory, or both. The display controller may provide video data, audio data, or both video and audio data to a display device 26. The computer system 1 may also include devices, such as one or more sensors, configured to collect data and provide the data to the processors 2. For example, the computer system 1 may include an environment sensor that collects data such as humidity data, temperature data, and pressure data, a motion sensor that collects data such as acceleration data or motion data, and the like. Other types of sensors can also be used. The display memory may be a dedicated memory for buffering video data. The display system 24 may be connected to a display device 26 such as a single display screen, a television, a tablet, or a portable device. In a certain embodiment, the display device 26 may include a speaker to render audio. Alternatively, a speaker for rendering audio may be connected to the I/O interface unit. In other embodiments, the functions provided by the display system 24 may be implemented by an integrated circuit that includes the processors 2. Similarly, the functions provided by the bus interface unit 9 may be implemented by an integrated circuit including the processors 2.

The I/O interface unit has a function for communicating with various storage or I/O devices. For example, the terminal interface unit 12 enables attachment of a user I/O device 20 such as a user output device, namely, a video display device or a speaker television, for example, or a user input device, namely, a keyboard, a mouse, a keypad, a touchpad, a trackball, a button, a light pen, or another pointing device, for example. The user may use the user interface to operate a user input device to input input data and instructions to the user I/O device 20 and the computer system 1 and to receive output data from the computer system 1. The user interface may, via the user I/O device 20, be displayed on a display device, reproduced by a loudspeaker, or printed via a printer, for example.

One or more disk drives or direct-access storage devices 22 can be attached to the storage interface 14 (typically, the devices are magnetic disk drive storage devices, but may also be a disk drive array configured to appear as a single disk drive, or may be other storage devices). In a certain embodiment, the storage device 22 may be implemented as any secondary storage device. The content of the memory 4 may be stored in the storage device 22 and read, as necessary, from the storage device 22. The network interface 18 may provide a communication path to enable the computer system 1 and other devices to communicate with each other. This communication path may be the network 30, for example.

Although the computer system 1 shown in FIG. 1 comprises a bus structure that provides direct communication paths between the processors 2, the memory 4, the bus interface 9, the display system 24, and the I/O bus interface unit 10, in other embodiments, the computer system 1 may include point-to-point links in a hierarchical configuration, star configuration, or web configuration, and a plurality of hierarchical buses, and parallel or redundant communication paths. Further, although the I/O bus interface unit 10 and the I/O bus 8 are shown as a single unit, in practice the computer system 1 may include a plurality of I/O bus interface units 10 or a plurality of I/O buses 8. Also, although a plurality of I/O interface units for isolating the I/O bus 8 from various communication paths leading to various I/O devices are shown, in another embodiment, some or all of the I/O devices may be directly connected to one system I/O bus.

In a certain embodiment, the computer system 1 may be a device that receives requests from other computer systems (clients) that do not have a direct user interface, such as a multi-user mainframe computer system, a single-user system, or a server computer. In other embodiments, the computer system 1 may be a desktop computer, a portable computer, a notebook computer, a tablet computer, a pocket computer, a telephone, a smartphone, or any other suitable electronic device.

<Configuration of Particle Beam Analyzer>

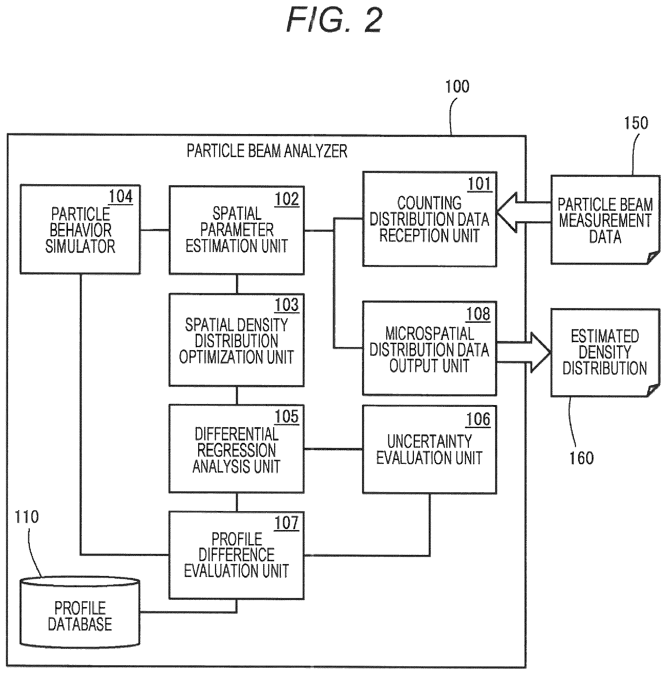

FIG. 2 is a functional block diagram illustrating an embodiment of the particle beam analyzer of the present invention.

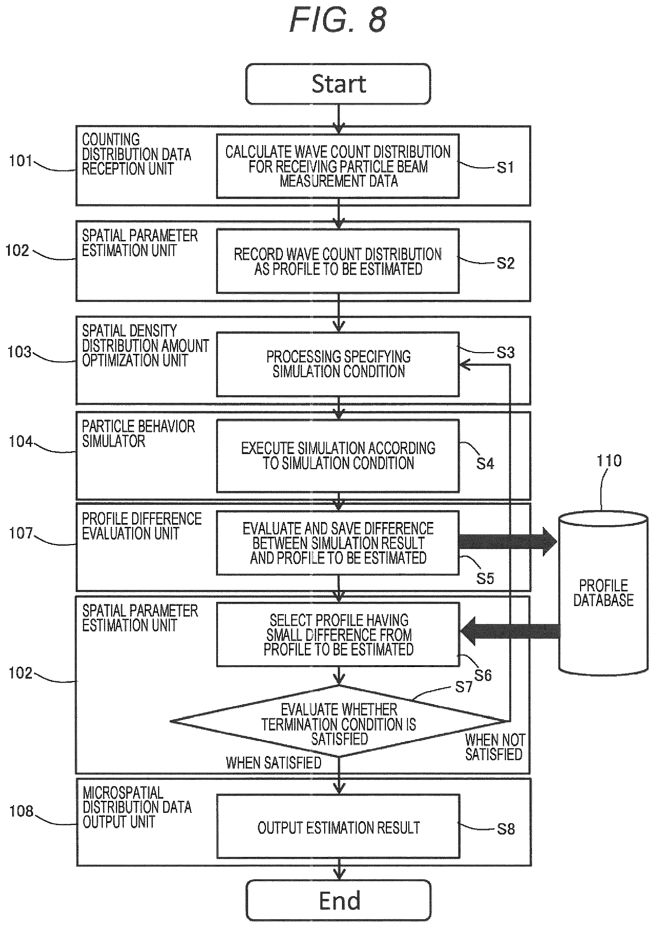

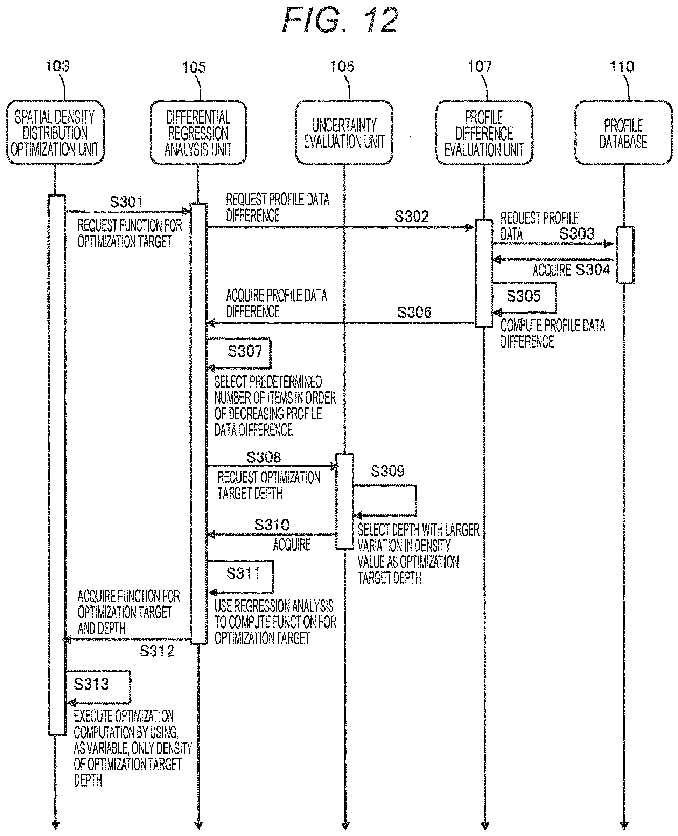

The particle beam analyzer 100 has functions of a count distribution data reception unit 101, a spatial parameter estimation unit 102, a spatial density distribution optimization unit 103, a particle behavior simulator 104, a differential regression analysis unit 105, an uncertainty level evaluation unit 106, a profile difference evaluation unit 107, and a microspatial distribution data output unit 108. These functions will be described in detail with reference to FIGS. 8 and 12. The particle beam analyzer 100 includes a profile database 110.

The particle beam analyzer 100 inputs the particle beam measurement data 150, performs analysis, and outputs an estimated density distribution 160. Here, examples of particle beams include a proton beam ($\alpha$ ray), an electron beam ($\beta$ ray), a muon beam, a photon beam (that is, an electromagnetic wave, $\gamma$-ray, X-ray, visible light, infrared ray, and the like), and a neutron beam.

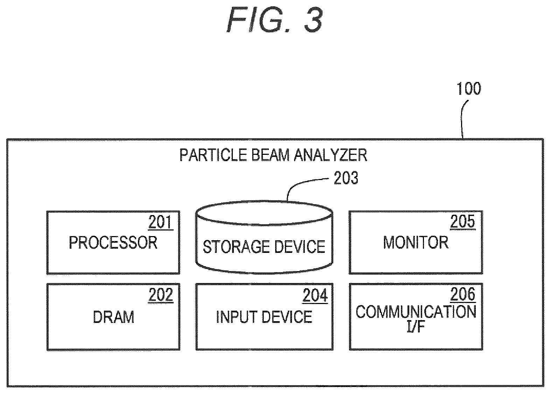

FIG. 3 is a schematic diagram of hardware illustrating an embodiment of the particle beam analyzer of the present invention. As a specific configuration, the computer system 1 of FIG. 1 can be applied.

As a hardware configuration example, the particle beam analyzer 100 includes a processor 201, a DRAM202, a storage device 203, an input device 204, a monitor 205, and a communications interface 206.

The processor 201 is a processor possessing computation performance, and is a processing unit that performs processing for executing each function illustrated in FIG. 2. The processor 201 can correspond to the processors 2 in FIG.

1.

The DRAM 202 is a volatile temporary storage area that can be read and written at high speeds. The storage device 203 is a permanent storage area utilizing a hard disk drive (HDD), a flash memory, or the like, and can store the profile database 110 illustrated in FIG. 2. The DRAM 202 and the storage device 203 can correspond to the memory 4 and the storage device 22 in FIG. 1. The profile database 110 may be stored in the storage device 22.

The input device 204 is a device for performing an input such as a mouse, a keyboard, and a control panel for performing an operation. The input device 204 may be provided integrally with the particle beam analyzer 100 or may be connected separately. The input device 204 can correspond to the user I/O device 20 of FIG. 1.

The monitor 205 is a display device for showing a user a result of the estimated density distribution 160 and the like illustrated in FIG. 2, a measurement status, and the like. For example, a screen display using liquid crystal or organic electro luminescence (OEL), touch-panel screen display, or the like can be applied. The monitor 205 may be provided integrally with the particle beam analyzer 100 or may be connected separately. The monitor 205 can correspond to the display device 26 in FIG. 1.

The communications interface 206 is an interface such as a serial port for performing communication to exchange information with the outside. The communications interface 206 may correspond to the network interface 18 in FIG. 1.

<Particle Beam Reflection Measurements

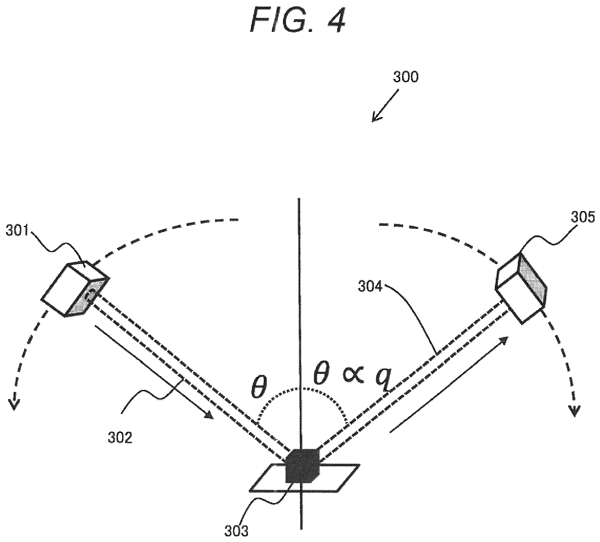

FIG. 4 is a conceptual diagram illustrating an example of particle beam reflection measurement for acquiring particle beam measurement data used by the particle beam analyzer of the present invention. Here, an example of a reflected wave is illustrated.

The particle beam reflection measurement device 300 includes a particle beam output unit 301 and a particle beam detection unit 305. The particle beam output unit 301 irradiates the sample 303 with the particle beam 302. The particle beam 302 is then reflected by the sample 303. The reflected particle beam 304 is detected by the particle beam detection unit 305. The information detected by the particle beam detection unit 305 is the brightness of the reflected wave.

An injection angle $\theta$ into the sample 303 relative to the sample 303 has a value equal to a reflection angle $\theta$ of the particle beam 304 reflected from the sample 303. Therefore, when the position of the injection angle $\theta$ is determined, the position of the particle beam output unit 301 is determined, and the position of the corresponding particle beam detection unit 305 is also determined. It has been clarified theoretically that the degrees $\theta$ between the injection angle and the reflection angle correspond to the wave count q. Therefore, the angle $\theta$ and the wave count q have a proportional relationship (for example, a constant multiple). Further, when the measurement is performed while changing the injection angle $\theta$, it is possible to acquire information on the wave count and the brightness corresponding to the information on the angle and the brightness.

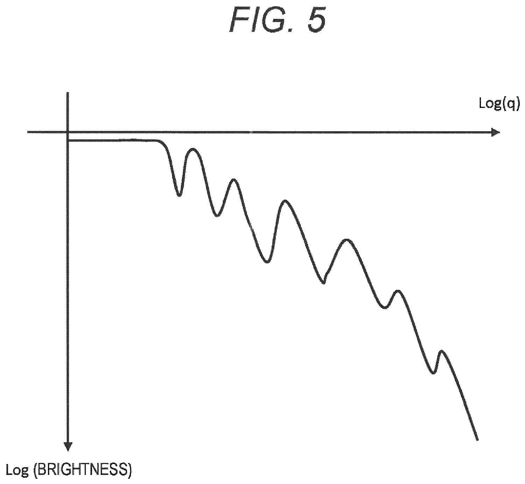

FIG. 5 is a diagram illustrating an example of particle beam measurement data used by the particle beam analyzer of the present invention. FIG. 5 is an example of data acquired by the particle beam reflection measurement device 300 of FIG. 4.

As illustrated in FIG. 5, information on the brightness with respect to the wave count q is obtained. This relationship is similar to the relationship between the angle and the brightness as described above. In FIG. 5, a double logarithmic graph is illustrated, and the brightness decreases in moving downward on the graph. As illustrated in FIG. 5, the shape of the graph oscillates due to the influence of interference of the wave function. Hereinafter, the shape of the graph acquired by the particle beam measurement as described above is referred to as a profile.

<Calculation of Density Distribution>

Next, calculation of the density distribution in the spatial structure will be described.

The relationship between the reflectance of the particle beam and the density at the position of the space can be expressed by the following well-known Equation 1. Examples of the particle beam include an X-ray.

[Equation 1]

$$R(Q) \propto \left| \int_{-\infty}^{\infty} e^{iQz} \frac{d\rho}{dz} dz \right|^2$$

... (Equation 1)

Here, R represents the brightness of the reflected wave. In addition, $Q=4\pi\sin(\theta)/\lambda$, where $\lambda$ represents the wavelength. Therefore, Q represents the wave count, and R is a function of the wave count Q. z represents the depth, in particular the depth from the surface of the sample. $\rho$ is the density, and is a function of z as a density distribution. This equation uses a complex function, but takes an absolute value, and hence, ultimately, a real value is obtained. In practice, calculation may be performed in each of the real part and the imaginary part, and the sum of squares may be finally obtained.

The integration on the right side of Equation 1 above can be converted into the form of addition as in Equation 2 below. This conversion enables calculation by a computer. Here, the differential form of $d\rho/dz$ is calculated through substitution with a value $\delta$. $\delta$ is obtained by taking the difference in density $\rho$ before and after a depth z. As a result, if the density distribution relative to the depth z is known, a brightness R relative to the wave count Q can be calculated.

[Equation 2]

$$\left| \int_{-\infty}^{\infty} e^{iQz} \frac{d\rho}{dz} dz \right|^2 \propto \left| \sum_i e^{iQz_i} \delta_{z_i} \right|^2$$

$$\dots \quad (Equation\ 2)$$

As described above, the feature of Equation 1 above enables calculation of the distribution of the brightness R relative to the wave count Q as long as the density distribution (spatial density distribution) relative to the depth z (spatial position) is known. However, even if the distribution of the brightness R relative to the wave count Q is known, the structure of the equation is such that the density distribution relative to the depth z cannot be calculated (back-calculated). Therefore, the density distribution relative to the depth z cannot be obtained directly from the measurement result (profile data) as illustrated in FIG. 5. For this reason, although it is conceivable to replace Equation 1 with a simple equation enabling a back calculation, in this case, an accurate density distribution cannot be obtained.

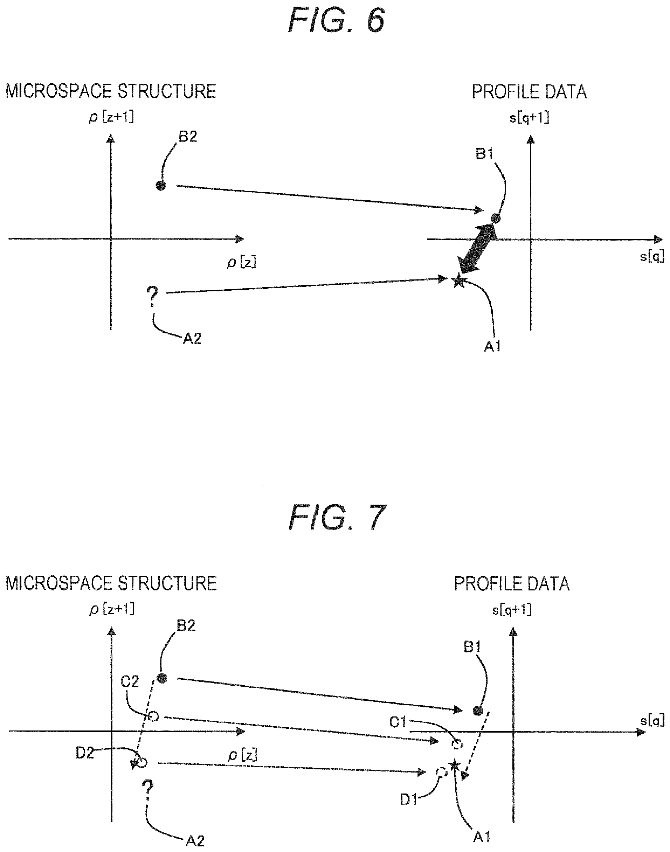

FIG. 6 is a diagram to illustrate the relationship between a microspace structure and profile data. FIG. 7 is a diagram to illustrate the relationship between a microspace structure and profile data for matching a predicted value with a measured value.

In FIGS. 6 and 7, the microspace structure is illustrated on the left side, and the profile data is illustrated on the right side. The microspace structure and the profile data are represented by two-dimensional vectors for simplicity, but are actually represented by multidimensional vectors.

In FIG. 6, assuming that the point of measurement of the profile data is A1, the relevant microspace structure is A2. However, as described in Equation 1, A2 of the microspace structure cannot be calculated from the profile data A1. Therefore, it is necessary to estimate A2 from the profile data A1. Here, profile data B1 for which the microspace structure is known as B2 is prepared. At this time, if A1 and B1 are a distance apart in the profile data, it is to be expected that A2 and B2 also do not match each other in the microspace structure.

Therefore, as illustrated in FIG. 7, a search is performed for profile data B1, C1, and D1, which correspond to the microspace structures B2, C2, and D2, and profile data close to the profile data A1 at the point of measurement. If profile data D1 which is closest to the profile data A1 is present, the microspace structure for which the point of measurement is A1 is expected to be close to the microspace structure D2 of the profile data D1. At such time, the optimization is performed on the basis of the a regression predicted value, and the simulation is executed under optimal conditions, and hence the microspace structure is calculated while reducing the processing load. The details of the specific processing will be described below with reference to FIGS. 8 and 12.

<Processing of Particle Beam Analyzer>

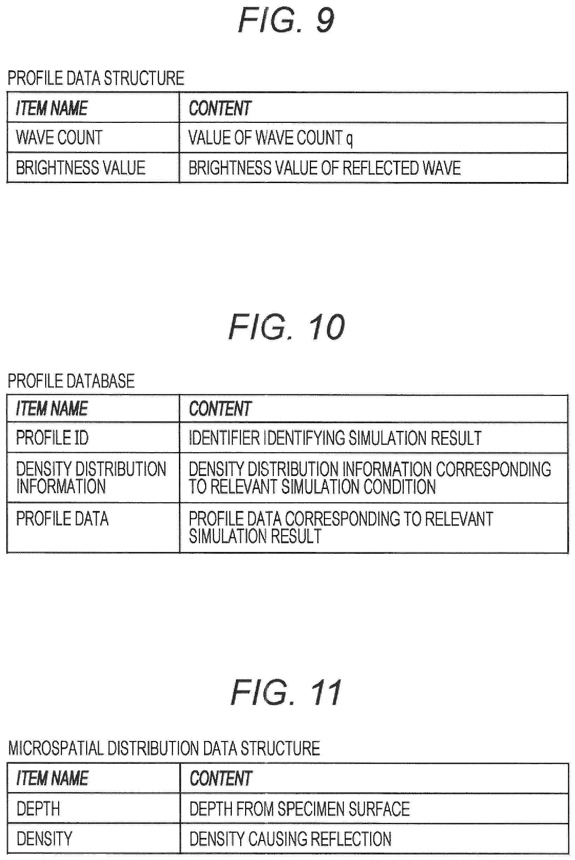

FIG. 8 is a flowchart illustrating an example of processing of the particle beam analyzer of the present invention. FIG. 9 is a diagram illustrating an example of a profile data structure. FIG. 10 is a diagram illustrating an example of a profile database. FIG. 11 is a diagram illustrating an example of a microspatial distribution data structure. Here, the processing of the particle beam analyzer 100 will be described with reference to each function illustrated in FIG. 2.

When the processing is started in the particle beam analyzer 100, in the initial step S1, the count distribution data reception unit 101 receives the particle beam measurement data 150 and calculates the wave count distribution. The data here is profile data of the particle beam measurement data as exemplified in FIG. 5. As illustrated in FIG. 9, the data structure is data on the wave count and the brightness value. The wave count is the value of the wave count q, and the brightness value is the brightness value of the reflected wave corresponding to each wave count q. The data of FIG. 9 is a list of data of brightness values with respect to wave counts.

Next, in step S2, the spatial parameter estimation unit 102 records the wave count distribution as a profile to be estimated (an input profile). The wave count distribution here is the wave count distribution calculated by the count distribution data reception unit 101 in step S1.

Next, in step S3, the spatial density distribution optimization unit 103 performs simulation condition specifying processing. The processing here is performed using the differential regression analysis unit 105, the uncertainty level evaluation unit 106, the profile difference evaluation unit 107, and the profile database 110 in addition to the spatial density distribution optimization unit 103. The simulation condition specifying processing is processing to specify a simulation condition. Specifically, the optimized microspatial distribution is calculated as a simulation condition. The microspatial distribution is a distribution of the density $\rho$ relative to the depth z as described above. Specific details of the processing will be described with reference to FIG. 12.

Next, in step S4, the particle behavior simulator 104 executes a simulation as per the simulation condition. The simulation condition here is the simulation condition specified in step S3. In the simulation here, a profile is calculated for an optimized microspatial distribution (spatial density distribution) constituting a simulation condition. The profile is the relationship of the wave count Q with respect to the luminance R, and can be calculated using Equations 1 and 2 above.

Next, in step S5, the profile difference evaluation unit 107 evaluates and stores the difference between the simulation result and the profile to be estimated. The simulation result here is the profile calculated in step S4. The profile to be estimated is the profile to be estimated recorded in step S2. The evaluation of the difference between the profiles can be performed, for example, by computing a difference such as the sum of squares of the differences between the profile values or the sum of absolute values of the profile values. In addition, by using the average of "absolute value of profile value difference ÷ profile value", it is possible to calculate what % difference exists. Accordingly, it is possible to equally evaluate a portion having a small absolute value and a portion having a large absolute value. For example, even in a case where the wave count q increases and the profile value decreases, it is possible to uniformly evaluate the difference. The data is stored in the profile database 110. Here, the data to be stored is the content of the optimized microspatial distribution as the simulation condition, the simulation result, and the evaluation of the difference between the profiles, and is stored as a set. Therefore, the profile difference evaluation unit 107 here also functions as a database update unit.

An example of data in the profile database 110 is illustrated in FIG. 10. For each profile ID, density distribution information and profile data are stored as a list of data. The profile ID is an identifier for identifying a simulation result. The density distribution information is spatial density distribution information corresponding to a condition for the simulation. The profile data is profile data corresponding to the result of the simulation. That is, the profile database 110 stores density distribution information and profile data corresponding thereto. The information and data are stored for different density distribution data. FIG. 11 illustrates an example of the microspatial distribution data structure, which is information corresponding to the density distribution information in FIG. 10. Here, the depth and the density are shown. The depth is the depth from the sample surface and the density is the density that causes reflection.

Next, in step S6, the spatial parameter estimation unit 102 selects a profile which has a small difference from the profile to be estimated. The difference is the same as that in S5, and for example, a difference such as a sum of squares of differences between profile values, a sum of absolute values of profile values, or an average of "absolute value of difference between profile values ÷ profile value" can be used. Among profiles having a small difference, the profile having the smallest difference is selected. The selection here is made from the profile database 110. Therefore, in addition to the profile stored in step S5, a profile already present in the profile database 110 also constitutes a target. Among the profiles, the profile having the smallest difference is selected.

Next, in step S7, the spatial parameter estimation unit 102 evaluates whether the end condition is satisfied. When the end condition is satisfied, the processing advances to step S8. When the end condition is not satisfied, the processing returns to step S3. Various conditions can be applied as the end condition. For example, a case where the difference is within a predetermined threshold value, a case where the number of times the processing is performed is a predetermined number of times or more, and so forth.

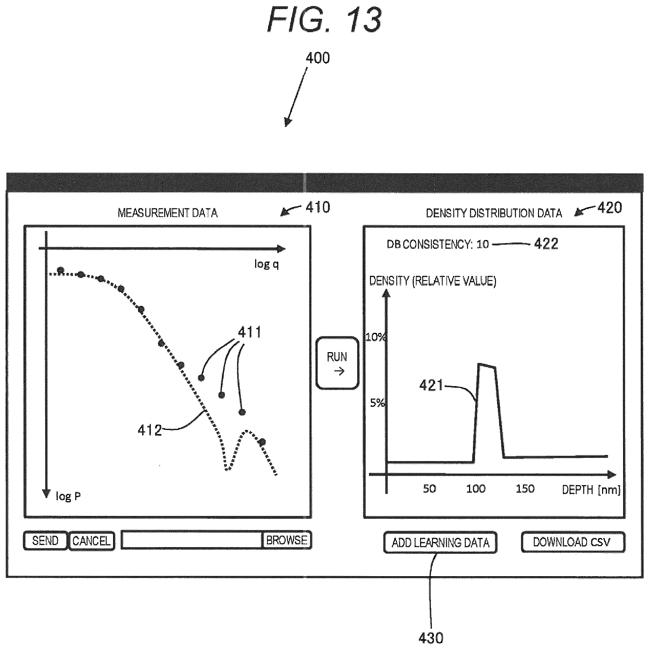

In step S8, the microspatial distribution data output unit 108 outputs the estimation result. The estimation result here is the profile data selected in step S6 and the density distribution (microspatial distribution) corresponding thereto. In addition, an index based on the difference may be outputted as described below with reference to FIG. 13. The output destination is the monitor 205, the communication interface 206, or the like, illustrated in FIG. 3.

<Simulation Condition Specifying Processing>

FIG. 12 is a flowchart illustrating an example of simulation condition specifying processing in the particle beam analyzer of the present invention. Here, the content of the simulation condition specifying processing in step S3 of FIG. 8 is illustrated.

First, in step S301, the spatial density distribution optimization unit 103 sends, to the differential regression analysis unit 105, a request for the function to be optimized. The function here is a function for performing optimization processing, and is expressed by Equation 3 described below.

Next, in step S302, the differential regression analysis unit 105 that has received the request for the function in step S301 issues a request for the difference in profile data to the profile difference evaluation unit 107. The difference here is the difference between the profile to be estimated recorded in step S2 of FIG. 8 and the profile data recorded in the profile database 110. In addition, the request here includes profile data for which a difference is requested and density distribution information corresponding thereto.

Next, in step S303, the profile difference evaluation unit 107 that has received the difference request in step S302 issues a request for profile data to the profile database 110. The profile data to be requested is all the profile data in the profile database 110. Alternatively, the profile data may be profile data in a predetermined range. In the next step S304, the profile difference evaluation unit 107 acquires profile data from the profile database 110. The profile data acquired here is the profile data as exemplified in FIG. 10 and also includes corresponding density distribution information.

Next, in step S305, the profile difference evaluation unit 107 that has acquired the profile data from the profile database 110 in step S304 calculates the difference between the profile data. The difference here is the difference between the profile to be estimated recorded in step S2 of FIG. 8 and the profile data acquired from the profile database 110. Similarly to S5, for example, a sum of squares of differences in profile values, a difference such as a sum of absolute values of profile values, an average of "absolute value of difference between profile values ÷ profile value", or the like can be used for the difference computation.

Next, in step S306, the differential regression analysis unit 105 acquires the profile data differences from the profile difference evaluation unit 107 for which the difference was calculated in step S305. In addition, the acquisition here includes profile data obtained by calculating the difference, and density distribution information corresponding thereto.

Next, in step S307, the differential regression analysis unit 105 that has acquired the profile data differences in step S306 selects a predetermined number of pieces of data in ascending order of the profile data differences. The predetermined number can be determined in advance. For example, the number of items is 10 or more, 30 or more, 50 or more, 100 or less, or 200 or less. In addition, the predetermined number of pieces of data may be determined using a threshold value related to a difference or a variation. That is, profile data having a difference or variation within a predetermined range is selected. As described above, the differential regression analysis unit 105 in step S307 has a function as a profile selection unit.

Next, in step S308, the differential regression analysis unit 105 issues, to the uncertainty level evaluation unit 106, a request for the optimization target depths for the profile data selected in step S307. Here, the optimization target depth is the value of the depth (z) to be optimized.

Next, in step S309, the uncertainty level evaluation unit 106 that has received the optimization target depth request selects the optimization target depth. Here, a predetermined number of depths having large variations in the density value of the microspatial distribution (density distribution) are selected and chosen as optimization target depths. The profile data obtained by performing the selection in step S307 also includes density distribution information. Here, on the basis of the density distribution information, the variation in density value for each depth is examined among the selected data. Then, a predetermined number of depths selected in descending order of variation in density value are selected as the optimization target depths. Alternatively, depths at which the variation in density value is equal to or greater than a predetermined value may be selected as the optimization target depths. The variation here can be evaluated using, for example, a variance value or the like. Therefore, the number of optimization target depths is not limited to one, rather, values may be of a plurality of depths (z) corresponding to variations in density value. The predetermined number of pieces of data is smaller than the total number of depth data for which density was examined, and is, for example, within 30%, particularly within 20%, and more particularly within 10%, or the like, of the number of depth data.

Next, in step S310, the differential regression analysis unit 105 acquires the optimization target depths selected in step S309 from the uncertainty level evaluation unit 106.

Next, in step S311, the differential regression analysis unit 105 calculates the function to be optimized after acquiring the optimization target depth in step S310. The function to be optimized can be estimated using well-known regression analysis. For example, Gaussian process regression can be used, or another known regression analysis may be used. In addition, the calculation may be performed while learning using artificial intelligence (AI).

Here, the function to be optimized can be expressed by the following equation.

$$y = f\ (\rho 1,\ \rho 2,\ \rho 3,\ \cdots,\ \rho n) \qquad \cdots \text{(Equation 3)}$$

Here, y is an objective variable and is the profile data difference. Further, explanatory variables are $\rho 1, \rho 2, \rho 3, \cdots$, and $\rho n$. Here, $\rho 1, \rho 2, \rho 3, \cdots$, and $\rho n$ are values of the density $\rho$ for each depth. Here, an example is illustrated in which the number of explanatory variables is n (n is a natural number), that is, an example in which the density $\rho$ for the depth at n points exists. The differences between the profile data are the differences between the profile to be estimated recorded in step S2 of FIG. 8 and the predetermined number of pieces of profile data selected in step S307. Similarly to S5, for example, a sum of squares of differences in profile values, a difference such as a sum of absolute values of profile values, an average of "absolute value of difference between profile values ÷ profile value", or the like can be used for the difference computation. Note that n is, for example, 50 or more, or 100 or more, which is a number corresponding to data to be acquired.

The function f in Equation 3 can be calculated using the predetermined number of pieces of profile data selected in step S307, the density distribution information corresponding thereto, and the data of the profile data difference calculated in step S305. The calculation is performed using well-known regression analysis as described above.

Next, in step S312, the spatial density distribution optimization unit 103 acquires the function to be optimized and the optimization target depths from the differential regression analysis unit 105 that calculated the function to be optimized in step S311. The function to be optimized is Equation 3 described above. The optimization target depth is the optimization target depth selected in step S309.

Next, in step S313, the optimization calculation is executed using, as a variable, only the density corresponding to the optimization target depth. In the optimization calculation, processing to find the value of each explanatory variable is performed such that the objective variable y expressed in Equation 3 is minimized or approaches 0. That is, the value of the density $\rho$ (values of $\rho1$ to $\rho n$) of each depth is found so as to minimize the difference y. The function f in Equation 3 has n variables, but performing the processing by using all the n variables as variables involves a load and time that correspond to the processing. For example, if n is 100, there are 100 variables. Therefore, these values are searched using only the value of the density with respect to the optimization target depth as a variable. The density for other depths is calculated as a fixed value. For example, when the densities related to the optimization target depth are $\rho1$, $\rho5$, and $\rho10$, only these three are set as variables, and the others are set as fixed values. Here, the value of the density $\rho$ which is a fixed value originally has a small variation. Therefore, for example, the value of the density of each depth corresponding to the profile having the smallest difference calculated in step S307 may be used as the fixed value. In addition, the average of the densities at the respective depths corresponding to the profile selected in S307 may be taken as a fixed value.

Any well-known method can be used for the optimization calculation. For example, the method is a gradient descent method, a genetic algorithm, or the like. Parameters such as an initial value of the optimization calculation may be executed in a plurality of settings. In this case, there are a plurality of simulation conditions.

The density values of $\rho1$ to $\rho n$ obtained in this manner are microspatial distributions indicating the distribution of the density p relative to the depth z. This is outputted as a simulation condition.

<Analysis Result Display Example>

FIG. 13 is an example of a display of an analysis result outputted by the particle beam analyzer of the present invention. The display here can be displayed by the monitor 205 or the like.

In the analysis result display 400, a measurement data display 410 and a density distribution data display 420 are displayed. In the example of FIG. 13, the measurement data display 410 is displayed on the left side, and the density distribution data display 420 is displayed on the right side. In addition, a learning data add button display 430 is displayed at the bottom.

The measurement data display 410 displays graphs of a estimation target profile 411 and an estimation result profile 412. The estimation target profile 411 is a graph of the profile data recorded in step S2 of FIG. 8. The estimation result profile 412 is a graph of the estimation result profile outputted in step S8 of FIG. 8. Here, by displaying the estimation target profile 411 and the estimation result profile 412 on the same graph, it is possible to visually confirm the difference therebetween. The higher the degree of coincidence between these graphs, the higher the accuracy of the estimation result.

In the density distribution data display 420, a density distribution graph 421 is displayed, and a matching degree 422 is displayed as a numerical value above the density distribution graph. The density distribution graph 421 is a graph display of the density distribution corresponding to the estimation result profile outputted in step S8 of FIG. 8. In FIG. 13, an example of a graph of the relative value (%) of the density with respect to the depth (nm) is illustrated. As a result, the density distribution of the estimation result can be known. Meanwhile, the matching degree 422 is an index based on the difference between the data of the estimation target profile 411 and the data of the estimation result profile 412. For example, when the difference is large, the value of the matching degree 422 corresponding thereto is displayed small, and so forth. Using this index, it is possible to know the difference between the estimation target profile 411 and the estimation result profile 412. If the profile database 110 has sufficient data (the profile and the corresponding density distribution data), a more accurate estimation can be performed. For this reason, the display of the matching degree 422 also serves as a guide as to whether the data is collected in the profile database 110.

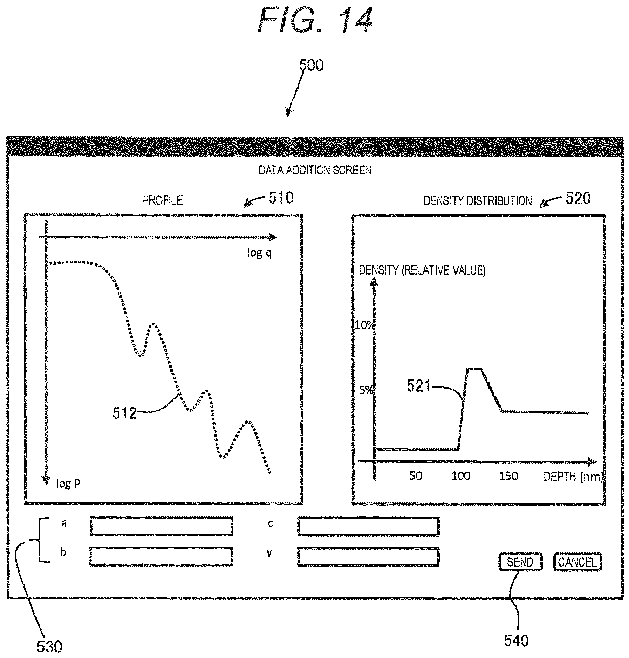

When the user selects this button, the learning data add button display 430 is switched to the next screen in FIG. 14.

By estimating the density distribution data display 420 in FIG. 13, the user is able to know the characteristics of the sample. For example, the characteristics appear when different substances are mixed or when deterioration advances. It can also be used for evaluation of a coating or the like. When the coating has deteriorated, the characteristics appear as opposed to when the coating has not deteriorated.

<Data Addition Screen Display Example>

FIG. 14 is an example of a display when data is to be added to the particle beam analyzer of the present invention.
In the data addition screen display 500, a profile display 510 and a density distribution display 520 are displayed. In the example of FIG. 14, the profile display 510 is displayed on the left side, and the density distribution display 520 is displayed on the right side. In addition, a parameter input display section 530 and a transmission button display 540 are displayed at the bottom.
The user inputs parameters such as numerical values to the parameter input display section 530. The parameter is a parameter such as a coefficient or a range for a predetermined function or the like. Although FIG. 14 illustrates an input display of four parameters ($a$, $b$, $c$, $\gamma$), the input display is not limited thereto. At this time, fluctuation may be given by, for example, adding or subtracting a predetermined minute random number to or from each parameter. As a result, data close to the condition designated by the user can be further padded.
Next, the density distribution display 520 displays the shape of the density distribution graph 521 determined by the parameters inputted to the parameter input display section 530. In the density distribution graph 521 here, the shape is determined by a function determined by the parameters thus inputted. This processing can be performed by the processor 201.
Next, a profile graph 511 corresponding to the density distribution graph 521 is calculated. This calculation can be performed using Equations 1 and 2 described above. This processing can be performed by the processor 201.
Next, when the user selects the transmission button display 540, data related to the profile graph 511 and the density distribution graph 521 is transmitted to the profile database 110. The data configuration is a data value configuration as exemplified in the profile database of FIG. 10.
Thus, the user can create a desired density distribution and accumulate, in the profile database 110, profile data corresponding to the density distribution. It is thus possible to increase the accuracy of the processing illustrated in FIG. 8.

<Advantageous Effects>

According to the embodiment as described above, it is possible to more accurately estimate the density distribution by estimating the shape of the density distribution (spatial density distribution) of the spatial structure by means of a method that does not limit the shape. Furthermore, at that time, an optimization calculation is performed. By limiting the variables of the optimization calculation to a depth density which has a large density variation, the load of calculation processing is reduced, and the calculation can be performed in a shorter time. It is also possible to reduce the cost of the processing device performing this processing. These processing steps are performed automatically, and an objective density distribution can be calculated simply by inputting data without requiring special knowledge for analysis. Convenience regarding spatial structure analysis is thus improved.
Note that the present invention is not limited to or by the above-described embodiment and includes various modifications. For example, the above-described embodiments have been described in detail to facilitate understanding of the present invention, and are not necessarily limited to or by embodiments having all the configurations described. In addition, part of the configuration of one embodiment can be replaced with the configuration of another embodiment, and the configuration of the other embodiment can also be added to the configuration of the one embodiment. Moreover, it is possible to add other configurations to part of the configuration of each embodiment, and to delete or substitute part of the configuration of the embodiments.
For example, in the above embodiment, the reflected wave has been described, but the present invention can be applied to transmission other than reflection.
Furthermore, X-ray is mainly given as an example of a particle beam, but other particle beams such as a neutron beam are also applicable. In addition to the particle beam, the present embodiment can also be applied to non-destructive inspection in which an ultrasonic wave is injected in a measurement target and reverberation thereof is subjected to frequency analysis, seismic source estimation based on frequency analysis of earthquake motion, and the like. As described above, the present embodiment can also be applied to an object that requires inverse estimation analysis in a case where it is difficult to directly measure a measurement target but can be measured as a frequency signal.

Reference Signs List

1                 computer system

| 2 | processor |
| 2A | processing device |
| 4 | memory |
| 6 | memory bus |
| 8 | I/O bus |
| 9 | bus interface unit |
| 10 | I/O bus interface unit |
| 12 | terminal interface unit |
| 14 | storage interface |
| 16 | I/O device interface |
| 18 | network interface |
| 20 | user I/O device |
| 24 | display system |
| 26 | display device |
| 30 | network |
| 50 | potential factor specifying application |
| 100 | particle beam analyzer |
| 101 | count distribution data reception unit |
| 102 | spatial parameter estimation unit |
| 103 | spatial density distribution optimization unit |
| 104 | particle behavior simulator |
| 105 | differential regression analysis unit |
| 106 | uncertainty level evaluation unit |
| 107 | profile difference evaluation unit |
| 108 | microspatial distribution data output unit |
| 110 | profile database |
| 150 | particle beam measurement data |
| 160 | estimated density distribution |
| 201 | processor |
| 202 | DRAM |
| 203 | storage device |
| 204 | input device |
| 205 | monitor |
| 206 | communications interface |
| 300 | particle beam reflection measurement device |
| 301 | particle beam output unit |
| 302 | particle beam |
| 303 | sample |
| 304 | particle beam |
| 305 | particle beam detection unit |
| 400 | analysis result display |
| 410 | measurement data display |
| 411 | profile to be estimated |
| 412 | estimation result profile |
| 420 | density distribution data display |
| 421 | density distribution graph |
| 422 | matching degree |
| 430 | learning data add button display |
| 500 | data addition screen display |
| 510 | profile display |
| 511 | profile graph |
| 520 | density distribution display |
| 521 | density distribution graph |
| 530 | parameter input display section |
| 540 | transmission button display |
| A1, BI, C1, D1 | profile data |
| A2, B2, C2, D2 | microspace structure |

**Claims**

1. A particle beam analyzer (100) that, when an input profile is provided which is obtained by a particle beam being injected into a sample and a reflected beam or a transmitted beam thereof being detected, calculates a spatial density distribution constituting a density distribution relative to a spatial position of the sample, the particle beam analyzer comprising:

   a profile database (110) that holds a plurality of pieces of data of a spatial density distribution and a profile corresponding to the spatial density distribution;
   a profile difference evaluation unit (107) that calculates a difference between a profile held in the profile database and the input profile;
   a profile selection unit (105) that selects a plurality of profiles from the data held in the profile database, on a basis of the difference calculated by the profile difference evaluation unit;
   an uncertainty level evaluation unit (106) that calculates an optimization target position constituting a spatial position specified on a basis of a variation in spatial density distribution for each spatial position with respect to a plurality of spatial density distributions corresponding to the profile selected by the profile selection unit;
   a differential regression analysis unit (105) that calculates, using regression analysis, a function for obtaining, from the spatial density distribution, a difference from the input profile by using the data held in the profile database and the difference calculated by the profile difference evaluation unit; and
   a spatial density distribution optimization unit (103) that calculates a spatial density distribution for which the difference of the function calculated by the differential regression analysis unit is minimized, by using, as a variable, only the spatial density in the optimization target position calculated by the uncertainty level evaluation unit.

2. The particle beam analyzer according to claim 1, wherein the uncertainty level evaluation unit calculates, as the optimization target position, a predetermined number of spatial positions determined in advance in descending order of variation in the spatial density distribution for each spatial position.

3. The particle beam analyzer according to claim 1, wherein the uncertainty level evaluation unit uses a variance value for the value of the spatial density distribution as an index for evaluating the variation in the spatial density distribution for each spatial position.

4. The particle beam analyzer according to claim 1, further comprising:

   a particle behavior simulator that calculates a profile from the spatial density distribution calculated by the spatial density distribution optimization unit; and
   a database update unit that adds, to the profile database, a set of the spatial density distribution calculated by the spatial density distribution optimization unit and the profile calculated by the particle behavior simulator.

5. The particle beam analyzer according to claim 4, further comprising a spatial parameter estimation unit that selects a profile having a small difference from the input profile with respect to a profile held in the profile database to which the set of the spatial density distribution and the profile is added by the database update unit.

6. The particle beam analyzer according to claim 5, further comprising a display section,

   wherein the display section displays a graph of the profile selected by the spatial parameter estimation unit, a graph of the spatial density distribution corresponding to the profile, a graph of the input profile, and a matching degree, and
   wherein the matching degree is an index based on the difference between the profile selected by the spatial parameter estimation unit and the input profile.

7. The particle beam analyzer according to claim 1, further comprising a display section,

   wherein the display section displays a graph of the spatial density distribution and a graph of the profile corresponding to the spatial density distribution,
   wherein a shape of the graph of the spatial density distribution can be determined by inputting a parameter, and
   wherein data of the graph of the displayed spatial density distribution and data of the graph of the profile corresponding to the spatial density distribution can be transmitted to the profile database.

8. A particle beam analysis method in which, when an input profile is provided which is obtained by a particle beam being injected into a sample and a reflected beam or a transmitted beam thereof being detected, a spatial density distribution constituting a density distribution relative to a spatial position of the sample is calculated using an analyzer (100), the particle beam method comprising:

a profile difference evaluation step in which a profile database (110) holds a plurality of pieces of data of a spatial density distribution and a profile corresponding to the spatial density distribution, and in which a difference between a profile held in the profile database and the input profile is calculated;

a profile selection step of selecting a plurality of profiles from the data held in the profile database, on a basis of the difference calculated in the profile difference evaluation step;

an uncertainty level evaluation step of calculating an optimization target position constituting a spatial position specified on a basis of a variation in spatial density distribution for each spatial position with respect to a plurality of spatial density distributions corresponding to the profile selected in the profile selection step;

a differential regression analysis step of calculating, using regression analysis, a function for obtaining, from the spatial density distribution, a difference from the input profile by using the data held in the profile database and the difference calculated by the profile difference evaluation step; and

a spatial density distribution optimization step of calculating a spatial density distribution for which the difference of the function calculated in the differential regression analysis step is minimized, by using, as a variable, only the spatial density in the optimization target position calculated in the uncertainty level evaluation step.

9. The particle beam analysis method according to claim 8, wherein the uncertainty level evaluation step calculates, as the optimization target position, a predetermined number of spatial positions determined in advance in descending order of variation in the spatial density distribution for each spatial position.

10. The particle beam analysis method according to claim 8, wherein the uncertainty level evaluation step uses a variance value for the value of the spatial density distribution as an index for evaluating the variation in the spatial density distribution for each spatial position.

11. The particle beam analysis method according to claim 8, further comprising:

a particle behavior simulator that calculates a profile from the spatial density distribution calculated by the spatial density distribution optimization step; and

a database update step of adding, to the profile database, a set of the spatial density distribution calculated by the spatial density distribution optimization step and the profile calculated by the particle behavior simulator.

12. The particle beam analysis method according to claim 11, further comprising a spatial parameter estimation step of selecting a profile having a small difference from the input profile with respect to a profile held in the profile database to which the set of the profile is added in the database update step.

**Patentansprüche**

1. Teilchenstrahlanalysator (100), der dann, wenn ein Eingangsprofil bereitgestellt wird, das dadurch erhalten wird, dass ein Teilchenstrahl in eine Probe eingespeist wird und ein reflektierter Strahl oder ein durchgelassener Strahl von ihm detektiert wird, eine räumliche Dichteverteilung berechnet, die eine Dichteverteilung in Bezug auf eine räumliche Position der Probe darstellt, wobei der Teilchenstrahlanalysator umfasst:

eine Profildatenbank (110), die mehrere Teile von Daten einer räumlichen Dichteverteilung und ein Profil, das der räumlichen Dichteverteilung entspricht, enthält;

eine Profilunterschiedsbeurteilungseinheit (107), die einen Unterschied zwischen einem Profil, das in der Profildatenbank enthalten ist, und dem Eingangsprofil berechnet;

eine Profilauswahleinheit (105), die mehrere Profile aus den Daten, die in der Profildatenbank enthalten sind, anhand des durch die Profilunterschiedsbeurteilungseinheit berechneten Unterschieds auswählt;

eine Ungewissheitsgradbeurteilungseinheit (106), die eine Optimierungszielposition, die eine räumliche Position darstellt, die anhand einer Variation der räumlichen Dichteverteilung für jede räumliche Position in Bezug auf mehrere räumliche Dichteverteilungen, die dem Profil entsprechen, das durch die Profilauswahleinheit ausgewählt wird, spezifiziert wird, berechnet,

eine Differenzialregressionsanalyseeinheit (105), die unter Verwendung einer Regressionsanalyse eine Funktion berechnet, um aus der räumlichen Dichteverteilung einen Unterschied von dem Eingangsprofil durch Verwenden der Daten, die in der Profildatenbank enthalten sind, und des durch die Profilunterschiedsbeurteilungseinheit berechneten Unterschieds zu erhalten; und

eine Einheit zur Optimierung einer räumlichen Dichteverteilung (103), die eine räumliche Dichteverteilung, für die der Unterschied der durch die Differenzialregressionsanalyseeinheit berechneten Funktion minimiert wird, durch Verwenden nur der räumlichen Dichte in der durch die Ungewissheitsgradbeurteilungseinheit berechneten Optimierungszielposition als eine Variable berechnet.

2. Teilchenstrahlanalysator nach Anspruch 1, wobei die Ungewissheitsgradbeurteilungseinheit als die Optimierungszielposition eine vorgegebene Anzahl von räumlichen Positionen, die im Voraus in absteigender Reihenfolge der Variation der räumlichen Dichteverteilung für jede räumliche Position bestimmt werden, berechnet.

3. Teilchenstrahlanalysator nach Anspruch 1, wobei die Ungewissheitsgradbeurteilungseinheit einen Varianzwert für den Wert der räumlichen Dichteverteilung als einen Index zum Beurteilen der Variation der räumlichen Dichteverteilung für jede räumliche Position verwendet.

4. Teilchenstrahlanalysator nach Anspruch 1, der ferner umfasst:

einen Teilchenverhaltenssimulator, der ein Profil aus der durch die Einheit zur Optimierung einer räumlichen Dichteverteilung berechneten räumlichen Dichteverteilung berechnet; und
eine Datenbankaktualisierungseinheit, die zu der Profildatenbank eine Gruppe der durch die Einheit zur Optimierung der räumlichen Dichte berechneten räumlichen Dichteverteilung und das durch den Teilchenverhaltenssimulator berechnete Profil hinzufügt.

5. Teilchenstrahlanalysator nach Anspruch 4, der ferner eine Einheit zum Schätzen eines räumlichen Parameters umfasst, die ein Profil mit einem kleinen Unterschied von dem Eingangsprofil in Bezug auf ein Profil, das in der Profildatenbank enthalten ist, zu der die Gruppe der räumlichen Dichteverteilung und das Profil durch die Datenbankaktualisierungseinheit hinzugefügt wurden, auswählt.

6. Teilchenstrahlanalysator nach Anspruch 5, der ferner einen Anzeigeabschnitt umfasst,

wobei der Anzeigeabschnitt einen Graphen des durch die Einheit zum Schätzen eines räumlichen Parameters ausgewählten Profils, einen Graphen der räumlichen Dichteverteilung, die dem Profil entspricht, einen Graphen des Eingangsprofils und einen Übereinstimmungsgrad anzeigt, und
wobei der Übereinstimmungsgrad ein Index ist, der auf dem Unterschied zwischen dem durch die Einheit zum Schätzen eines räumlichen Parameters ausgewählten Profil und dem Eingangsprofil beruht.

7. Teilchenstrahlanalysator nach Anspruch 1, der ferner einen Anzeigeabschnitt umfasst,

wobei der Anzeigeabschnitt einen Graphen der räumlichen Dichteverteilung und einen Graphen des Profils, das der räumlichen Dichteverteilung entspricht, anzeigt,
wobei eine Form des Graphen der räumlichen Dichteverteilung durch Eingeben eines Parameters bestimmt werden kann und
wobei Daten des Graphen der angezeigten räumlichen Dichteverteilung und Daten des Graphen des Profils, das der räumlichen Dichteverteilung entspricht, an die Profildatenbank übertragen werden können.

8. Teilchenstrahlanalyseverfahren, in dem dann, wenn ein Eingangsprofil bereitgestellt wird, das dadurch erhalten wird, dass ein Teilchenstrahl in eine Probe eingespeist wird und ein reflektierter Strahl oder ein durchgelassener Strahl von ihm detektiert wird, eine räumliche Dichteverteilung, die eine Dichteverteilung in Bezug auf eine räumliche Position der Probe darstellt, unter Verwendung eines Analysators (100) berechnet wird,
wobei das Teilchenstrahlverfahren umfasst:

einen Profilunterschiedsbeurteilungsschritt, in dem eine Profildatenbank (110) mehrere Teile von Daten einer räumlichen Dichteverteilung und ein Profil, das der räumlichen Dichteverteilung entspricht, enthält und in dem ein Unterschied zwischen einem Profil, das in der Profildatenbank enthalten ist, und dem Eingangsprofil berechnet wird;
einen Profilauswahlschritt des Auswählens mehrerer Profile aus den Daten, die in der Profildatenbank enthalten sind, anhand des in dem Profilunterschiedsbeurteilungsschritt berechneten Unterschieds;

einen Ungewissheitsgradbeurteilungsschritt des Berechnens einer Optimierungszielposition, die eine räumliche Position darstellt, die anhand einer Variation der räumlichen Dichteverteilung für jede räumliche Position in Bezug auf mehrere räumliche Dichteverteilungen, die dem in dem Profilauswahlschritt ausgewählten Profil entsprechen, spezifiziert wird;

einen Differenzialregressionsanalyseschritt des Berechnens unter Verwendung einer Regressionsanalyse einer Funktion, um aus der räumlichen Dichteverteilung einen Unterschied von dem Eingangsprofil durch Verwenden der Daten, die in der Profildatenbank enthalten sind, und des durch den Profilunterschiedsbeurteilungsschritt berechneten Unterschieds zu erhalten; und

einen Schritt zur Optimierung einer räumlichen Dichteverteilung des Berechnens einer räumlichen Dichteverteilung, für die der Unterschied der in dem Differenzialregressionsanalyseschritt berechneten Funktion durch Verwenden als eine Variable nur der räumlichen Dichte in der Optimierungszielposition, die in dem Ungewissheitsgradbeurteilungsschritt berechnet wird, minimiert wird.

9. Teilchenstrahlanalyseverfahren nach Anspruch 8, wobei der Ungewissheitsgradbeurteilungsschritt als die Optimierungszielposition eine vorgegebene Anzahl von räumlichen Positionen, die im Voraus in absteigender Reihenfolge der Variation der räumlichen Dichteverteilung für jede räumliche Position bestimmt werden, berechnet.

10. Teilchenstrahlanalyseverfahren nach Anspruch 8, wobei der Ungewissheitsgradbeurteilungsschritt einen Varianzwert für den Wert der räumlichen Dichteverteilung als einen Index zum Beurteilen der Variation der räumlichen Dichteverteilung für jede räumliche Position verwendet.

11. Teilchenstrahlanalyseverfahren nach Anspruch 8, das ferner umfasst:

einen Teilchenverhaltenssimulator, der ein Profil aus der durch den Schritt zur Optimierung einer räumlichen Dichteverteilung berechneten räumlichen Dichteverteilung berechnet; und

einen Datenbankaktualisierungsschritt des Hinzufügens zu der Profildatenbank einer Gruppe der räumlichen Dichteverteilung, die durch den Schritt zur Optimierung der räumlichen Dichte berechnet wird, und des durch den Teilchenverhaltenssimulator berechneten Profils.

12. Teilchenstrahlanalyseverfahren nach Anspruch 11, das ferner einen Schritt des Schätzens eines räumlichen Parameters des Auswählens eines Profils mit einem kleinen Unterschied von dem Eingangsprofil in Bezug auf ein Profil, das in der Profildatenbank enthalten ist, zu der die Gruppe des Profils in dem Datenbankaktualisierungsschritt hinzugefügt wurde, umfasst.

**Revendications**

1. Analyseur de faisceau de particules (100) qui, quand il est fourni un profil d'entrée, qui est obtenu par un faisceau de particules injecté jusque dans un échantillon et qu'un faisceau réfléchi ou un faisceau transmis de celui-ci est détecté, calcule une distribution de densité spatiale constituant une distribution de densité relativement à une position spatiale de l'échantillon, l'analyseur de faisceau de particules comprenant :

une base de données de profils (110) qui contient une pluralité d'éléments de données d'une distribution de densité spatiale et un profil correspondant à la distribution de densité spatiale ;

une unité d'évaluation de différence de profils (107) qui calcule une différence entre un profil contenu dans la base de données de profils et le profil d'entrée ;

une unité de sélection de profils (105) qui sélectionne une pluralité de profils à partir des données contenues dans la base de données de profils, sur une base de la différence calculée par l'unité d'évaluation de différence de profils ;

une unité d'évaluation de niveau d'incertitude (106) qui calcule une position cible d'optimisation constituant une position spatiale spécifiée sur une base d'une variation dans une distribution de densité spatiale pour chaque position spatiale par rapport à une pluralité de distributions de densités spatiales correspondant au profil sélectionné par l'unité de sélection de profils ;

une unité d'analyse de régression différentielle (105) qui calcule, à l'aide d'une analyse de régression, une fonction pour obtenir, à partir de la distribution de densité spatiale, une différence par rapport au profil d'entrée en utilisant les données contenues dans la base de données de profils et la différence calculée par l'unité d'évaluation de différence de profils ; et

une unité d'optimisation de distribution de densité spatiale (103) qui calcule une distribution de densité spatiale pour laquelle la différence de la fonction calculée par l'unité d'analyse de régression différentielle est réduite au minimum, en utilisant, à titre de variable, uniquement la densité spatiale dans la position cible d'optimisation calculée par l'unité d'évaluation de niveau d'incertitude.

2. Analyseur de faisceau de particules selon la revendication 1, dans lequel l'unité d'évaluation de niveau d'incertitude calcule, à titre de position cible d'optimisation, un nombre prédéterminé de positions spatiales déterminées à l'avance dans un ordre décroissant de variation dans la distribution de densité spatiale pour chaque position spatiale.

3. Analyseur de faisceau de particules selon la revendication 1, dans lequel l'unité d'évaluation de niveau d'incertitude utilise une valeur de variance pour la valeur de la distribution de densité spatiale à titre d'indice d'évaluation de la variation dans la distribution de densité spatiale pour chaque position spatiale.

4. Analyseur de faisceau de particules selon la revendication 1, comprenant en outre :

   un simulateur de comportement de particules qui calcule un profil à partir de la distribution de densité spatiale calculée par l'unité d'optimisation de distribution de densité spatiale ; et
   une unité de mise à jour de base de données qui ajoute, à la base de données de profils, un ensemble de la distribution de densité spatiale calculée par l'unité d'optimisation de distribution de densité spatiale, et du profil calculé par le simulateur de comportement de particules.

5. Analyseur de faisceau de particules selon la revendication 4, comprenant en outre une unité d'estimation de paramètre spatial qui sélectionne un profil ayant une petite différence par rapport au profil d'entrée par rapport à un profil contenu dans la base de données de profils à laquelle l'ensemble de la distribution de densité spatiale et du profil est ajouté par l'unité de mise à jour de base de données.

6. Analyseur de faisceau de particules selon la revendication 5, comprenant en outre une section d'affichage,

   dans lequel la section d'affichage affiche un graphique du profil sélectionné par l'unité d'estimation de paramètre spatial, un graphique de la distribution de densité spatiale correspondant profil, un graphique du profil d'entrée, et un degré de correspondance, et
   dans lequel le degré de correspondance et un indice sur la base de la différence entre le profil sélectionné par l'unité d'estimation de paramètre spatial et le profil d'entrée.

7. Analyseur de faisceau de particules selon la revendication 1, comprenant en outre une section d'affichage,

   dans lequel la section d'affichage affiche un graphique de la distribution de densité spatiale et un graphique du profil correspondant à la distribution de densité spatiale,
   dans lequel une forme du graphique de la distribution de densité spatiale peut être déterminée en entrant un paramètre, et
   dans lequel des données du graphique de la distribution de densité spatiale affiché et des données du graphique du profil correspondant à la distribution de densité spatiale peuvent être transmises à la base de données de profils.

8. Procédé d'analyse de faisceau de particules dans lequel, quand il est fourni un profil d'entrée qui est obtenu par un faisceau de particules injecté jusque dans un échantillon et qu'un faisceau réfléchi ou un faisceau transmis de celui-ci est détecté, une distribution de densité spatiale constituant une distribution de densité relativement à une position spatiale de l'échantillon est calculée à l'aide d'un analyseur (100),
   le procédé d'analyse de faisceau de particules comprenant :

   une étape d'évaluation de différence de profils dans laquelle une base de données de profils (110) contient une pluralité d'éléments de données d'une distribution de densité spatiale et un profil correspondant à la distribution de densité spatiale et dans laquelle une différence entre un profil contenu dans la base de données de profils et le profil d'entrée est calculée ;
   une étape de sélection de profils consistant à sélectionner une pluralité de profils à partir des données contenues dans la base de données de profils, sur une base de la différence calculée dans l'étape d'évaluation de différence de profils ;
   une étape d'évaluation de niveau d'incertitude consistant à calculer une position cible d'optimisation constituant une position spatiale spécifiée sur une base d'une variation dans une distribution de densité spatiale pour chaque position spatiale par rapport à une pluralité de distributions de densités spatiales correspondant au profil sélectionné dans l'étape de sélection de profils ;

une étape d'analyse de régression différentielle consistant à calculer, à l'aide d'une analyse de régression, une fonction pour obtenir, à partir de la distribution de densité spatiale, une différence par rapport au profil d'entrée en utilisant les données contenues dans la base de données de profils et la différence calculée dans l'étape d'évaluation de différence de profils ; et

une étape d'optimisation de distribution de densité spatiale consistant à calculer une distribution de densité spatiale pour laquelle la différence de la fonction calculée dans l'étape d'analyse de régression différentielle est réduite au minimum, en utilisant, à titre de variable, uniquement la densité spatiale dans la position cible d'optimisation calculée dans l'étape d'évaluation de niveau d'incertitude.

9. Procédé d'analyse de faisceau de particules selon la revendication 8, dans lequel l'étape d'évaluation de niveau d'incertitude calcule, à titre de position cible d'optimisation, un nombre prédéterminé de positions spatiales déterminées à l'avance dans un ordre décroissant de variation dans la distribution de densité spatiale pour chaque position spatiale.

10. Procédé d'analyse de faisceau de particules selon la revendication 8, dans lequel l'étape d'évaluation de niveau d'incertitude utilise une valeur de variance pour la valeur de la distribution de densité spatiale à titre d'indice d'évaluation de la variation dans la distribution de densité spatiale pour chaque position spatiale.

11. Procédé d'analyse de faisceau de particules selon la revendication 8, comprenant en outre :

un simulateur de comportement de particules qui calcule un profil à partir de la distribution de densité spatiale calculée dans l'étape d'optimisation de distribution de densité spatiale ; et

une étape de mise à jour de base de données consistant à ajouter, à la base de données de profils, un ensemble de la distribution de densité spatiale calculée dans l'étape d'optimisation de distribution de densité spatiale, et du profil calculé par le simulateur de comportement de particules.

12. Procédé d'analyse de faisceau de particules selon la revendication 11, comprenant en outre une étape d'estimation de paramètre spatial consistant à sélectionner un profil ayant une petite différence par rapport au profil d'entrée par rapport à un profil contenu dans la base de données de profils à laquelle l'ensemble de la distribution de densité spatiale et du profil est ajouté dans l'étape de mise à jour de base de données.

# FIG. 1

COMPUTER SYSTEM
1

DISPLAY DEVICE 26

DISPLAY SYSTEM 24

PROCESSOR 2

2A

2B

BUS IF 9

6 MEMORY BUS

MEMORY 4

APPLICATION 50

I/O BUS IF 10

8

I/O BUS

12
TERMINAL INTERFACE

14
STORAGE INTERFACE

16
I/O DEVICE INTERFACE

18
NETWORK INTERFACE

20
USER IO DEVICE

22
STORAGE DEVICE

NETWORK 30

# FIG. 2

# FIG. 3

100

PARTICLE BEAM ANALYZER

203

| 201 PROCESSOR | STORAGE DEVICE | 205 MONITOR |
| --- | --- | --- |
| 202 DRAM | 204 INPUT DEVICE | 206 COMMUNICATION I/F |

# FIG. 4

# FIG. 5

# FIG. 6

MICROSPACE STRUCTURE

PROFILE DATA

# FIG. 7

MICROSPACE STRUCTURE

PROFILE DATA

# FIG. 8

```
                          ┌──────────────┐
                          │    Start     │
                          └──────────────┘
```

| 101 | COUNTING DISTRIBUTION DATA RECEPTION UNIT | CALCULATE WAVE COUNT DISTRIBUTION FOR RECEIVING PARTICLE BEAM MEASUREMENT DATA — S1 |

| 102 | SPATIAL PARAMETER ESTIMATION UNIT | RECORD WAVE COUNT DISTRIBUTION AS PROFILE TO BE ESTIMATED — S2 |

| 103 | SPATIAL DENSITY DISTRIBUTION AMOUNT OPTIMIZATION UNIT | PROCESSING SPECIFYING SIMULATION CONDITION — S3 |

| 104 | PARTICLE BEHAVIOR SIMULATOR | EXECUTE SIMULATION ACCORDING TO SIMULATION CONDITION — S4 |

| 107 | PROFILE DIFFERENCE EVALUATION UNIT | EVALUATE AND SAVE DIFFERENCE BETWEEN SIMULATION RESULT AND PROFILE TO BE ESTIMATED — S5 |

110 — PROFILE DATABASE

| 102 | SPATIAL PARAMETER ESTIMATION UNIT | SELECT PROFILE HAVING SMALL DIFFERENCE FROM PROFILE TO BE ESTIMATED — S6 |
| | | EVALUATE WHETHER TERMINATION CONDITION IS SATISFIED — S7 |

WHEN NOT SATISFIED

WHEN SATISFIED

| 108 | MICROSPATIAL DISTRIBUTION DATA OUTPUT UNIT | OUTPUT ESTIMATION RESULT — S8 |

```
                          ┌──────────────┐
                          │     End      │
                          └──────────────┘
```

# FIG. 9

PROFILE DATA STRUCTURE

| ITEM NAME | CONTENT |
|---|---|
| WAVE COUNT | VALUE OF WAVE COUNT q |
| BRIGHTNESS VALUE | BRIGHTNESS VALUE OF REFLECTED WAVE |

# FIG. 10

PROFILE DATABASE

| ITEM NAME | CONTENT |
|---|---|
| PROFILE ID | IDENTIFIER IDENTIFYING SIMULATION RESULT |
| DENSITY DISTRIBUTION INFORMATION | DENSITY DISTRIBUTION INFORMATION CORRESPONDING TO RELEVANT SIMULATION CONDITION |
| PROFILE DATA | PROFILE DATA CORRESPONDING TO RELEVANT SIMULATION RESULT |

# FIG. 11

MICROSPATIAL DISTRIBUTION DATA STRUCTURE

| ITEM NAME | CONTENT |
|---|---|
| DEPTH | DEPTH FROM SPECIMEN SURFACE |
| DENSITY | DENSITY CAUSING REFLECTION |

# FIG. 12

# FIG. 13

400

MEASUREMENT DATA ← 410

DENSITY DISTRIBUTION DATA ← 420

log q

DB CONSISTENCY: 10 —— 422

DENSITY (RELATIVE VALUE)

411

10%

421

412

5%

50    100    150    DEPTH [nm]

log P

RUN
→

SEND | CANCEL |                    | BROWSE

ADD LEARNING DATA          DOWNLOAD CSV

430

# FIG. 14

500

DATA ADDITION SCREEN

PROFILE    510

DENSITY DISTRIBUTION   520

log q

512

log P

DENSITY (RELATIVE VALUE)

10%

5%

521

50    100    150    DEPTH [nm]

a

b

c

γ

SEND   CANCEL

530

540

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020218462 A

- JP 2017116330 A

**Non-patent literature cited in the description**

- Particle size analysis - Small-angle X-ray scattering. *ISO 17867:2015*